# EUROPEAN PATENT SPECIFICATION

(11) **EP 2 039 531 B1**
(45) Date of publication and mention of the grant of the patent: **27.10.2010**
(21) Application number: 08164576.4
(22) Date of filing: 18.09.2008
(51) Int. Cl.: B60C 1/00, B60C 11/00, B60C 11/14

(54) **Tire having tread with an internal closed cellular rubber transition layer**
Reifen mit Profil mit einer intern geschlossenen zellenförmigen Gummiübergangsschicht
Pneu doté d'une bande avec une couche de transition en caoutchouc cellulaire fermé de manière interne

(30) Priority: 19.09.2007 US 857578
(43) Date of publication of application: 25.03.2009
(73) Proprietor: The Goodyear Tire & Rubber Company, Akron, OH 44316-0001 (US)
(72) Inventor: Zhang, Ping, Hudson, OH 44236 (US); Sanstrom, Paul Harry, Cuyahoga Falls, OH 44223 (US); Hubbell, Joseph Kevin, Akron, OH 44313 (US); Neubauer, Robert Anthony, Medina, OH 44256 (US)
(74) Representative: Kutsch, Bernd

(56) References cited:
- EP-A- 0 576 130
- JP-A- 7 076 202
- US-A- 5 176 765

## Description

### Background and Presentation of the Invention

Pneumatic rubber tires have treads which are typically configured with an outer rubber cap layer which contains a running surface for the tire and an underlying tread base rubber layer which interfaces with the tire carcass. The tire carcass may include a circumferential cord reinforced rubber belt layer.

The tread outer rubber cap layer is typically prepared with a relatively expensive combination of elastomers and compounding ingredients intended to promote a tire running surface with suitable resistance to tread wear, with good wet traction and with good (e.g. reduced) rolling resistance.

Accordingly, motivation is present for preparing a novel cost-savings tire tread with suitable physical attributes in a manner which is a departure from past practice.

For this invention, it is proposed to provide a significantly less expensive internal closed cell rubber transition rubber layer positioned between the outer non-cellular tread cap rubber layer and inner non-cellular tread base rubber layer. Said internal and intermediately positioned closed cell rubber transition layer is therefore non-ground contacting and is therefore exclusive of the running surface of said outer tread cap rubber layer, and, further, exclusive of the tread base rubber layer.

In practice, a major function of the tread cap layer is typically to promote traction for the tire tread at its running surface, promote resistance to tread wear and often to promote a reduction in rolling resistance for the tire.

The radially inner tread base rubber layer is typically composed of a softer and cooler running rubber composition, as compared to the rubber composition of the radially outer tread cap layer.

For this invention, the closed cellular internal intermediate transition rubber layer is presented as a significant departure from use of either a combination of circumferential outer non-cellular tread cap rubber layer and an underlying circumferential tread non-cellular base rubber layer or a combination of outer cellular tread cap layer and underlying non-cellular tread base layer.

In this manner, then, the internal closed cellular transition tread rubber layer positioned between a non-cellular tread outer rubber cap layer and non-cellular inner tread rubber base layer is considered herein to be neither of the outer tread cap rubber layer nor the tread base rubber layer and, further, serves a function for the tread different from the outer tread cap rubber layer and the inner tread base rubber layer.

This is considered herein to be significant in a sense that inclusion of the internal closed cellular transition rubber layer is to provide a beneficial reduction in tire weight and cost without adversely affecting the wet traction and treadwear properties of the running surface of the outer tread cap rubber layer.

In practice, the internal transition closed cellular intermediate rubber layer can further promote support for vehicle load through virtually millions of closed cellular gas-filled (e.g. nitrogen, carbon dioxide filled) bubbles contained in the rubber layer which may, in turn, promote an increased cushion effect and might provide a reduction of noise for vehicular ride comfort, depending somewhat upon variables such as, for example, the nature of the internal closed cellular rubber layer, the particular tire and the associated vehicular suspension system.

Heretofore, various dual layered tire treads have been proposed which are composed of a cap/base construction in which the outer tread cap rubber layer contains a running surface for the tire and the underlying tread base rubber layer provides, in a sense, a cushion for the tread cap layer, such as for example US-A- 6,959,743 or of a dual tread base layer configuration, such as for example US-A- 6,095,217 as well as a cap/base construction in which the base layer extends into lugs of the tread and into its tread cap layer such as for example US-A- 6,336,486.

Closed cellular rubber layers have been used for various components of a rubber tire as a puncture sealant layer. For example, see US-A- 4,163,467, US-A- 4,210,588, US-A- 4,249,588 and US-A- 4,210,187.

Further, various tread configurations have been suggested which contain a closed cellular rubber layer to promote, for example, enhanced ice traction, such as, for example US-A- 6,427,738, US-A- 6,336,487, US-A0 6,021,831, US-A- 5,753,365, US-A- 5,181,976, US-A- 5,147,477 and US-A- 4,249,588.

The tire tread of this invention differs significantly therefrom in at least one aspect in the sense that its transition rubber layer is intended to be exclusive of the outer tread cap rubber layer and the tread base rubber layer, if used.

The internal intermediate, transition closed cellular rubber layer may be formed, for example, by co-extrusion of the blowing agent-containing rubber layer together with the tread cap rubber layer and tread base rubber layer. The formation of the closed cellular internal rubber layer is formed by activation of the heat activatable (heat activatable in a sense of having an ability to decompose at an elevated temperature to release a gaseous product) during the curing of the tire assembly in a suitable tire cure mold at an elevated temperature with the release of a gas from a resultant decomposition of the blowing agent to form a closed cellular foam. The internal transition closed cellular foam rubber layer is thereby integral with both the outer tread rubber cap layer (on one side of the closed cellular rubber layer) and the tread base rubber layer (on the opposite side of the closed cellular rubber layer).

In the description of this invention, the terms "rubber" and "elastomer" where used herein, are used interchangeably, unless otherwise prescribed. The terms "rubber composition", "compounded rubber" and "rubber compound", where used herein, are used interchangeably to refer to "rubber which has been blended or mixed with various ingredients" and the term "compound" relates to a "rubber composition" unless otherwise indicated.

In the description of this invention, the term "phr" refers to parts of a respective material per 100 parts by weight of rubber, or elastomer. The terms "cure" and "vulcanize" are used interchangeably unless otherwise indicated.

EP-A- 0 576 130, corresponding with the preamble of claim 1, describes a pneumatic tire comprising a tread wherein the tread comprises an inner rubber layer which is made of a foamed rubber.

JP-A- 07-076202 describes a pneumatic tire comprising a tread and a casing wherein the casing comprises a foaming rubber layer comprising air bubbles.

US-A- 5,176,765 describes a pneumatic tire comprising an outer foam rubber layer which serves to improve tire performance on icy and snowy roads.

### Summary and Practice of the Invention

In accordance with this invention, a tire according to claim 1 and a process according to claim 11 is provided.

Dependent claims refer to preferred embodiments of the invention.

In practice, the said internal closed cellular rubber transition rubber layer comprises an in situ formed closed cellular structure which is formed during the curing of the tire assembly at an elevated temperature by activation of a heat activatable (elevated temperature activatable) blowing agent.

In practice, the rubber composition of the closed cellular transition rubber layer may contain conjugated diene-based elastomer(s), one or more reinforcing fillers such as for example, carbon black, synthetic amorphous silica such as, for example, precipitated silica, ultra high molecular weight polyethylene (UHMWPE), syndiotactic polybutadiene, short fibers including chopped fibers, as well as other ingredients commonly used in rubber compounds for tire applications.

In one embodiment, said closed cell transition layer rubber comprises, based upon parts by weight per 100 parts by weight rubber (phr):
(A) 100 phr of at least one diene-based, preferably conjugated diene-based, elastomer;
(B) 20 to 120 phr of reinforcing filler comprising:
   (1) rubber reinforcing carbon black, or
   (2) a combination of rubber reinforcing black and synthetic amorphous silica containing up to 100 phr, alternately from 5 to 100, phr of synthetic amorphous silica, preferably precipitated silica;
wherein said rubber layer may further contain one or more of ultra high molecular weight polyethylene (UHMWPE), syndiotactic polybutadiene, and short fibers to promote enhanced stiffness and dimensional stability of the closed cellular rubber composition.

A significant aspect of the process according to the invention is for the blowing agent to form the closed cellular structure for the internal rubber layer:
(A) in situ within the tread comprising the internal rubber layer positioned between the uncured outer rubber layer and uncured base rubber layer, and
(B) during the curing of the internal rubber layer (and thereby during the curing of the tread containing the internal rubber layer).

In one embodiment of the process, said circumferential uncured rubber tread is prepared by co-extruding together said uncured internal rubber layer, outer uncured layer and uncured tread base rubber layer to from an uncured tread rubber strip.

In accordance with this invention, the foam rubber composition contains the product of methylene donor and acceptor compounds in an amount of, for example, 0.1 to 10 phr of each or their combination.

Representative examples of methylene donor compounds are, for example, hexamethoxymethylmelamine (preferable), hexaethoxymethylmelamine, ethoxymethylpyridinium chloride, N,N',N'-trimethylmelamine, N-methylmelamine and N',N"-methylmelamine as well as hexamethylenetetramine. For example, see US-A- 5,886,074.

Representative examples of methylene acceptor compounds are, for example, phenolformaldehyde reactive resin, resorcinol, resorcinol monobenazoate, phenolic cashew nut oil resin and polyhydric phenoxy resin. For example, see US-A- 5,206,289 and US-A- 4,605,696.

A significant aspect of utilization of the product of said methylene donor and methylene acceptor compounds (formed in situ within the rubber composition by separate addition of the methylene donor and acceptor compounds) is to provide a closed cell foam intermediate layer within the tire tread which promotes stiffness or dimensional stability and handling qualities for the overall tire tread itself as well as an associated weight reduction of the tire tread.

The blowing agents contemplated for the formation of the closed cellular rubber tread inner layer are those which liberate gases upon heating to an elevated temperature, such as, for example, elevated temperatures experienced during the curing of the tire in a suitable tire mold. Representative examples of such agents are those which liberate gases such as, for example, nitrogen and carbon dioxide and may be, for example, various nitro, sulfonyl and azo compounds. Usually agents which liberate nitrogen are preferred. Representative of various blowing agents are, for example, p,p'-oxybis(benzenesulfonyl hydrazide), dinitrosopentamethylene tetramine, N,N'-dimethyl-N,N'-ditnitrosophthalimide, azodicarbonamide, sulfonyl hydrazides such as for example, benzenesulfonyl hydrazide, toluenesulfonyl hydrazide and sulfonyl semicarbazides such as for example, p-toluene sulfonyl semicarbazide and p,p'-oxy-bis-(benzenesulfonyl semicarbazide).

Various rubber reinforcing carbon blacks might be used for the tread rubber compositions, depending upon whether they are intended for use in the tire tread cap rubber layer or tread base rubber layer, or said intermediate transition cellular rubber layer. Representative of various rubber reinforcing blacks which may be considered, as referred to by their ASTM designations are those such as for example, although not intended to be limiting, N110, N120, N121, N134, N220, N234, N330, N550 and N650. These and other additional rubber reinforcing carbon blacks may found, for example, in The Vanderbilt Rubber Handbook (1978), Page 417.

Representative of various diene-based elastomers for said tread cap rubber, said tread transition rubber layer and said tread base rubber layer may include, for example, styrene-butadiene copolymers (prepared, for example, by organic solvent solution polymerization or by aqueous emulsion polymerization), isoprene/butadiene copolymers, styrene/isoprene/butadiene terpolymers and tin coupled organic solution polymerization prepared styrene/butadiene copolymers, cis 1,4-polyisoprene (natural and synthetic, usually preferably natural) and cis 1,4-polybutadiene as well as trans 1,4-polybutadiene 3,4-polyisoprene and high vinyl polybutadiene rubber.

### Brief Description of the Drawings

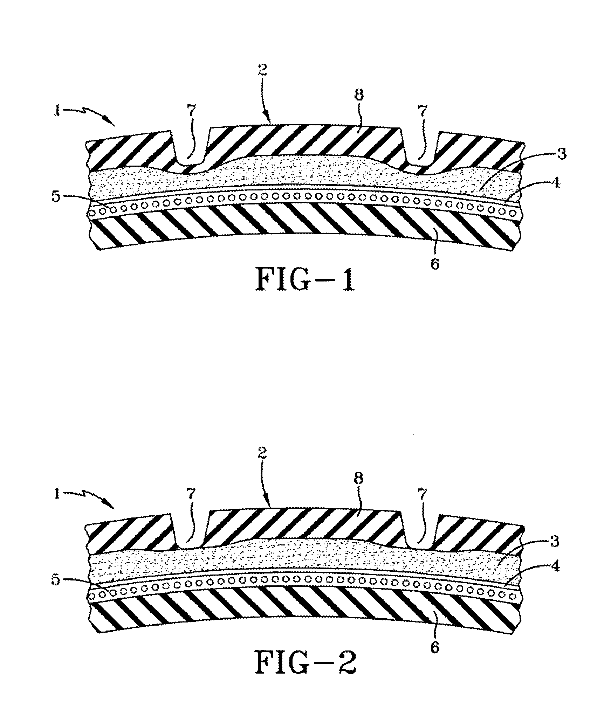

For a further understanding of this invention, FIGURE 1 and FIGURE 2 are provided as a partial cross-sectional view of a tire tread showing an internal, intermediate, non-ground contacting transition closed cellular foam layer within the tire tread configuration.

### The Drawings

FIG 1 depicts a tread construction of a tread 1 having a circumferential non-cellular outer tread cap rubber layer 2 with grooves 7 and associated lugs 8, an internal closed cellular (closed cell containing) transition tread rubber layer 3 in a sense of replacing an internal portion of the tread cap rubber layer 2 positioned between said tread outer cap non-cellular rubber cap layer 2 and a circumferential non-cellular tread base rubber layer 4. FIG 1 also depicts a circumferential belt ply, or plies, 5 for the tire carcass 6 underlying said tread 1, namely said tread base rubber layer 4 and overlaying the tire carcass 6. If desired, a nylon cord reinforced rubber layer (not shown) may also be positioned on top of the belt ply, or plies 5.

FIG 2 represents the same tread construction as FIG 1 except that the closed cellular transition rubber layer 3 occupies a significantly greater portion of the tread 1, particularly the non-cellular outer tread cap rubber layer 2, and extends to the bottom of at least a portion of the grooves 7, although in practice, a very thin rubber layer (not shown) of the tread cap rubber composition might, if desired, separate the closed cell transition layer 3 from the actual bottom of the grooves 7.

Accordingly, the circumferential closed cellular inner transition rubber layer 3 is shown as being an internal component of the tire tread itself in a sense of being positioned between and bridging two non-cellular circumferential rubber layers within the tire tread configuration, namely between said non-cellular tread cap rubber layer 2 and said non-cellular tread base rubber layer 4.

In practice, the rubber compositions may be prepared in at least one preparatory (non-productive) mixing step in an internal rubber mixer, often a sequential series of at least two separate and individual preparatory internal rubber mixing steps, or stages, in which the diene-based elastomer is first mixed with the prescribed silica and/or carbon black as the case may be followed by a final mixing step (productive mixing step) in an internal rubber mixer, or optionally on an open mill mixer, where curatives (sulfur and sulfur vulcanization accelerators), and the blowing agent for the rubber composition for said transition rubber layer, are blended at a lower temperature and for a substantially shorter period of time.

It is conventionally required after each internal rubber mixing step that the rubber mixture is actually removed from the rubber mixer and cooled to a temperature below 40°C, perhaps to a temperature in a range of 20°C to 40°C and then added back to an internal rubber mixer for the next sequential mixing step, or stage.

The forming of a tire component is contemplated to be by conventional means such as, for example, by extrusion, or by calendering, of rubber composition to provide a shaped, unvulcanized rubber component such as, for example, a tire tread.

It is understood that the tire, as a manufactured article, is prepared by shaping and curing the assembly of its components at an elevated temperature (e.g. 140°C to 170°C) and elevated pressure in a suitable mold.

It is readily understood by those having skill in the pertinent art that the rubber composition would be compounded by methods generally known in the rubber compounding art, such as mixing the various sulfur-vulcanizable constituent rubbers with various commonly used additive materials, as herein before discussed, such as, for example, curing aids such as sulfur, activators, retarders and accelerators, processing additives, such as rubber processing oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

Typical amounts of fatty acids, if used, which can include stearic acid, comprise 0.5 to 3 phr. Typical amounts of zinc oxide comprise 1 to 5 phr. Typical amounts of waxes comprise 1 to 5 phr. Typical amounts of peptizers comprise 0.1 to 1 phr. Typical peptizers may be, for example, pentachlorothiophenol and dibenzamidodiphenyl disulfide.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 4 phr.

Accelerators are used to control the time and/or temperature required for vulcanization and to improve the properties of the vulcanizate. In one embodiment, a single accelerator system may be used, i.e., primary accelerator. Conventionally and preferably, a primary accelerator(s) is used in total amounts ranging from 0.5 to 4. In another embodiment, combinations of a primary and a secondary accelerator might be used with the secondary accelerator being used in smaller amounts (of 0.05 to 3 phr) in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The mixing of the rubber composition can preferably be accomplished by the aforesaid sequential mixing process. For example, the ingredients may be mixed in at least two stages, namely, at least one non-productive (preparatory) stage followed by a productive (final) mix stage. The final curatives are typically mixed in the final stage which is conventionally called the "productive" or "final" mix stage in which the mixing typically occurs at a temperature, or ultimate temperature, lower than the mix temperature(s) of the preceding non-productive mix stage(s).

### EXAMPLE I

Rubber compositions were prepared for evaluating an effect of providing an closed cellular rubber composition for an internal transition, intermediate layer for a tire tread to be positioned between a non-cellular outer tread cap rubber layer and a non-cellular tread base rubber layer.

Sample A is a Control rubber sample. Experimental rubber Samples B through G contained a heat activatable blowing agent.

The rubber compositions were prepared by mixing the ingredients in sequential non-productive (NP) and productive (PR) mixing steps in one or more internal rubber mixers.

The basic formulation for the rubber Samples is presented in the following Table 1 and recited in parts by weight unless otherwise indicated.

**Table 1**

| **Non-Productive Mixing Step (NP), (mixed to 160°C)** | **Parts** |
|---|---|
| Emulsion prepared E-SBR rubber¹ | 70 |
| Cis 1,4-polybutadiene rubber² | 30 |
| Antioxidant³ | 1.5 |
| Carbon black (N120)⁴ | 90 |
| Processing oil and wax⁵ | 24 |
| Stearic acid⁶ | 2 |
| Zinc oxide | 2 |

| **Productive Mixing Step (PR), (mixed to 110°C)** | |
|---|---|
| Sulfur and sulfur cure accelerators⁷ | 4.6 |
| Blowing agent, heat activatable⁸ | 3.75 |

| | |
|---|---|
| ¹Emulsion polymerization prepared styrene/butadiene rubber (E-SBR) 1712C™ from The Goodyear Tire & Rubber Company ²Cis 1,4-polybutadiene rubber as BUD1207™ from The Goodyear Tire & Rubber Company 3Antoxidant of the diamine type ⁴Rubber reinforcing carbon black as N120, an ASTM designation ⁵Rubber processing oil and microcrystalline wax, primarily aromatic rubber processing oil ⁶Fatty acid comprised of at least 90 weight percent stearic acid and a minor amount of other fatty acid comprised primarily of palmitic and oleic acids. ⁷Sulfur cure accelerators of the sulfenamide and thiuram types ⁸Heat activatable (elevated temperature activatable) blowing agent comprised of p,p'-oxybis(benzenesulfonyl hydrazide) as Celogen OT™ from the Crompton Corporation. | |

The following Table 2 illustrates cure behavior and various physical properties of rubber compositions based upon the basic formulation of Table 1.

**Table 2**

| | **Samples** | | | |
|---|---|---|---|---|
| | **Control** | | | |
| | **A** | **B** | **C** | **D** |
| Blowing agent (phr) | 0 | 2.5 | 5 | 10 |
| **Rheometer¹, 160°C** | | | | |
| Maximum torque (dNm) | 17 | 15.4 | 12.3 | 8.6 |
| Minimum torque (dNm) | 3.5 | 3.8 | 3.7 | 3.6 |
| Delta torque (dNm) | 13.5 | 11.6 | 8.6 | 5 |
| T90 (minutes) | 6.1 | 4.2 | 4.1 | 13 |
| **Stress-strain, ATS², 14 min, 160°C** | | | | |
| Tensile strength (MPa) | 16.2 | 16.9 | 14.9 | 8.8 |
| Elongation at break (%) | 604 | 657 | 714 | 674 |
| 300 % modulus (MPa) | 6.5 | 6.2 | 4.7 | 3.3 |
| **Rebound** | | | | |
| 23°C | 24.7 | 24.8 | 24.3 | 30.6 |
| 100°C | 39.8 | 38.6 | 36.1 | 46.2 |
| **Shore A Hardness** | | | | |
| 23°C | 74 | 74 | 72 | 54 |
| 100°C | 59 | 59 | 56 | 39 |
| **DIN Abrasion³, (10N)** | | | | |
| Relative volume loss, cc | 119 | 120 | 112 | 215 |
| Compound density (g/cc) | 1.158 | 1.162 | 1.144 | 0.775 |

| | | | | |
|---|---|---|---|---|
| ¹Moving Die Rheometer instrument, model MDR-2000 by Alpha Technologies, used for determining cure characteristics of elastomeric materials, such as for example torque, T90 etc. ²Automated Testing System instrument by the Instron Corporation which incorporates six tests in one system. Such instrument may determine ultimate tensile, ultimate elongation, modulii, etc. Data reported in the Table is generated by running the ring tensile test station which is an Instron 4201 load frame. ³DIN-53516 | | | | |

It can be seen from Table 2 that the density of the rubber composition (Compound density) is reduced when 5 and 10 phr of the blowing agent (Samples C and D) was introduced into the rubber composition and heat activated (elevated temperature activated) during the curing of the rubber composition at an elevated temperature.

This is considered herein to be significant in a sense that this Example demonstrates that the compound density can be controlled (e.g. reduced for Samples C and D) by the amount of the blowing agent added to the rubber composition.

### EXAMPLE II

A similar evaluation was conducted as in Example I to determine if a closed cellular rubber can be prepared with improved rebound property, particularly for use as said internal closed cellular tread rubber layer. For this Example, the formulation was similar except that a methylene donor (in a form of hexamethoxymethylmelamine) and methylene acceptor (in a form of a phenolformaldehyde reactive resin) were added to the formulation as indicated in the following Table 3 for a product thereof to be formed in situ within the rubber composition.

Rubber Sample E was a control Sample without the blowing agent and without the methylene donor and methylene acceptor compounds.

Rubber Samples F through K are experimental Samples which contain various amounts of the heat activatable blowing agent. Rubber Samples I through K also contained a combination of the methylene donor and methylene acceptor compounds.

The rubber Samples were prepared in the manner of the Sample preparation used in Example I.

**Table 3**

| **Non-Productive Mixing Step (NP), (mixed to 160°C)** | **Parts** |
|---|---|
| Emulsion prepared E-SBR rubber¹ | 70 |
| Cis 1,4-polybutadiene rubber² | 30 |
| Antioxidant³ | 1.5 |
| Carbon black (N120)⁴ | 90 |
| Processing oil and wax⁵ | 24 |
| Stearic acid⁶ | 2 |
| Zinc oxide | 0 and 3 |

| **Productive Mixing Step (PR), (mixed to 110°C)** | |
|---|---|
| Sulfur and sulfur cure accelerators⁷ | 4.6 |
| Blowing agent, heat activatable⁸ | 0, 7, 8 and 9 |
| Methylene donor¹⁰ | 0 and 4 |

| | |
|---|---|
| ⁹ Phenolformaldehyde reactive resin as SMD™ 30207 from the SI Group ¹⁰Composite of hexamethoxymethylmelamine and silica carrier in a 28/72 weight ratio and thereby 72 percent active, reported in the above Table 3 as the composite. | |

The following Table 4 illustrates cure behavior and various physical properties of rubber compositions based upon the basic formulation of Table 3.

**Table 4**

| | **Samples** | | | | | | |
|---|---|---|---|---|---|---|---|
| | **Control** | | | | | | |
| | **E** | **F** | **G** | **H** | **I** | **J** | **K** |
| Blowing agent (phr) | 0 | 7 | 8 | 9 | 7 | 8 | 9 |
| Methylene donor (phr) | 0 | 0 | 0 | 0 | 4 | 4 | 4 |
| Methylene acceptor (phr) | 0 | 0 | 0 | 0 | 3 | 3 | 3 |

| **Stress-strain, ATS, 14 min, 160°C** | | | | | | | |
|---|---|---|---|---|---|---|---|
| Tensile strength (MPa) | 16.9 | 10.7 | 7.9 | 4.8 | 11.3 | 8.9 | 7.8 |
| Elongation at break (%) | 570 | 677 | 645 | 536 | 728 | 659 | 638 |
| 300 % modulus, ring (MPa) | 7.6 | 3.8 | 3.2 | 2.4 | 3.9 | 3.5 | 3.2 |

| **Rebound** | | | | | | | |
|---|---|---|---|---|---|---|---|
| 23°C | 22.8 | 24.9 | 27.3 | 28.9 | 26.1 | 28.1 | 29.5 |
| 100°C | 39.1 | 39.6 | 42.6 | 46.2 | 35.9 | 38.5 | 41.5 |
| Shore A Hardness, 23°C | 72 | 66 | 61 | 55 | 68 | 63 | 57 |
| DIN Abrasion, Relative volume loss | 133 | 165 | 230 | 303 | 195 | 222 | 295 |
| Density (Specific gravity), (g/cc) | 1.158 | 0.955 | 0.842 | 0.725 | 0.914 | 0.82 | 0.737 |

| **RPA (100°C), Storaqe Modulus G',MPa¹** | | | | | | | |
|---|---|---|---|---|---|---|---|
| Uncured G' 15 % strain | 0.202 | 0.209 | 0.209 | 0.209 | 0.215 | 0.221 | 0.218 |
| Cured G'modulus, 10% strain | 1.421 | 1.097 | 1.021 | 0.969 | 1.427 | 1.372 | 1.309 |

| **Blowout rubber failure test²** | | | | | | | |
|---|---|---|---|---|---|---|---|
| Final temperature of the rubber, °C | 182 | 136 | 138 | 132 | 140 | 136 | 132 |
| Final test time, min, (60 min max) | 22 | 60 | 60 | 60 | 60 | 60 | 60 |
| Blowout failure within 60 minutes | Yes | No | No | No | No | No | No |

| | | | | | | | |
|---|---|---|---|---|---|---|---|
| ¹Rubber Process Analyzer as RPA 2000^{™} instrument by Alpha Technologies ²ASTM D623 | | | | | | | |

From Table 4 it can be seen that the density of the rubber composition (rubber Samples I, J and K) was significantly reduced by the incorporation of (and subsequent heat activation of) from 7 through 9 phr of the blowing agent with the amount of reduction of the density being proportional to the amount of blowing agent used.

From Table 4 it can further be seen that the introduction of the methylene donor and methylene acceptor compounds into the blowing agent-containing rubber Samples I, J and K resulted in substantially maintained stiffness (G' at 100°C and a low 10 percent strain) and a blowing agent content, particularly for a level of 7 and 8 phr in rubber Samples I and J.

This is considered herein as being significant in a sense of indicating that a dimensional stability for the tire tread and resultant handling performance for a tire can be promoted.

It further demonstrates that the reduction in density of the rubber composition can be obtained in combination with substantially maintaining physical properties such as rebound and stiffness which thereby demonstrates that a weight reduction can be obtained while providing a closed cellular rubber composition that can be useful as the aforesaid tire tread internal, intermediate rubber layer positioned between a circumferential outer non-cellular tread outer tread cap layer and a circumferential non-cellular tread base rubber layer as a part of a tread configuration.

From Table 4 it can additionally be seen that the blowout performance of the rubber composition (Samples F through K) was improved with the addition of the combination of blowing agent and methylene donor and methylene acceptor compounds.

This is considered herein to be significant in a sense that the durability of the tire tread can thereby be promoted with the internal cellular rubber layer positioned between said outer non-cellular tread cap rubber layer and tread non-cellular rubber base rubber layer of a tread configuration and is a further demonstration that a tread weight reduction can be obtained by providing such closed cellular internal, transition rubber layer.

Although it is seen in Table 4 that the DIN abrasion value is adversely affected, this rubber composition is to be used internally within the tread configuration and not relied upon for a wear-resistant tire tread running surface.

### EXAMPLE III

Vehicular tires were prepared as a build-up assembly of uncured rubber components including a tread having layered configuration.

For a Control Tire (L), the uncured tread configuration comprised of an outer tread cap rubber layer (without a blowing agent) and an intermediate rubber layer (without a blowing agent) positioned between said outer tread cap rubber layer and a tread base rubber layer (also without a blowing agent).

For Control Tire (L), the outer tread cap rubber layer and internal intermediate rubber layer were comprised of a rubber composition containing reinforcing filler comprised of carbon black and a high level of precipitated silica together with a coupling agent for the precipitated silica and thereby referred to herein as being "silica reinforced".

Two Experimental uncured rubber tires (M and N) were similarly prepared except that the internal, intermediate tread layer was provided as rubber compositions according to the formulations of Samples I and J, respectively of Example II, namely Sample I for Tire M and Sample J for Tire N and thereby contained reinforcement as carbon black and contained a elevated temperature activatable blowing agent.

The tire assemblies were individually placed in a suitable tire mold under conditions of elevated pressure and temperature to shape and cure the respective tires.

For Experimental Tires M and N the blowing agent contained in the internal transition rubber layer was caused by the elevated molding temperature to liberate its gas to form the closed cellular structure, or configuration, in situ within the internal rubber layer of the tire tread within the tire mold, and to therefore form a tire with a tread cross-section similar to FIG 1 of the Drawings.

The following Table 5 reports observed results.

**Table 5**

| | **Tire** | | |
|---|---|---|---|
| | **Control** | | |
| | **L** | **M** | **N** |
| Outer, non-cellular tread cap layer | silica reinforced | silica reinforced | silica reinforced |
| Internal tread rubber layer | silica reinforced | I | J |
| Tread base rubber layer | Natural rubber based rubber composition for all three tires | | |
| Tire Weight (kg) | 11.2 | 10.88 | 10.84 |
| Tire Rolling Resistance (kg) | 4.80 | 4.67 | 4.74 |

From Table 5 it can be seen that the overall weights of the Experimental Tires M and N, which contained the internal intermediate closed cellular rubber, are significantly reduced as compared to the Control Tire L.

This is considered herein as being significant in a sense that a weight reduction of the tire can be achieved with an indicated enhanced durability from the physical properties reported in Table 4 of Example II.

From Table 5 it can also be seen that the rolling resistances for the Experimental Tires M and N compared favorably with the rolling resistance for the Control Tire L. This is considered herein to be significant in a sense that the inclusion of the internal transition closed cellular layer did not degrade the rolling resistance of the tire.

## Claims

1. A tire having a rubber tread (1) comprising a circumferential non-cellular tread outer cap layer (2), a tread base non-cellular rubber layer (4) and an internal circumferential intermediate transition closed cellular rubber layer (3) positioned between said outer tread cap rubber layer (2) and said tread base non-cellular rubber layer (4);
wherein said outer tread cap rubber layer (2) comprises a lug and groove configuration with raised lugs (8) having tread running surfaces on the outer surfaces of said lugs (8), said running surfaces intended to be ground-contacting, and grooves (7) positioned between said lugs (8);
wherein said internal intermediate transition cellular rubber layer (3) abridges and joins said outer non-cellular rubber cap layer (2) and said non-cellular base rubber layer (4) of said tread configuration;
**characterized in that** said internal intermediate transition cellular rubber layer (3) is excluded from the running surface of the tire;
and wherein the rubber composition of said internal closed cellular rubber layer (3) contains the product of a combination of a methylene donor and methylene acceptor.

2. The tire of claim 1 wherein said internal closed cellular rubber transition rubber layer (3) comprises an in situ formed closed cellular structure which is formed during the curing of the tire assembly at an elevated temperature by activation of an elevated temperature activatable blowing agent.

3. The tire of claim 1 whether said product of methylene donor and methylene acceptor is formed by reaction of said methylene donor and methylene acceptor in situ within said rubber composition.

4. The tire of claim 1 or 3 wherein said methylene donor comprises at least one of hexamethoxymethylmelamine, hexaethoxymethylmelamine, ethoxymethylpyridinium chloride, N,N',N'-trimethylmelamine, N-methylmelamine and N',N"-methylmelamine, hexamethylenetetramine and their mixtures.

5. The tire of claim 1 or 3 wherein said methylene acceptor comprises at least one of phenolformaldehyde reactive resin, resorcinol, resorcinol monobenazoate, phenolic cashew nut oil resin and polyhydric phenoxy resin.

6. The tire of at least one of the previous claims wherein the rubber composition of said internal closed cellular rubber layer (4) contains one or more of ultra high molecular weight polyethylene (UHMWPE), syndiotactic polybutadiene, short fibers and their mixtures.

7. The tire of at least one of the previous claims wherein the internal closed cell transition layer rubber comprises, based upon parts by weight per 100 parts by weight rubber (phr):
(A) 100 phr of at least one diene-based elastomer;
(B) 20 to 120 phr of a reinforcing filler comprising:
(1) rubber reinforcing carbon black, or
(2) a combination of rubber reinforcing black and silica, preferably synthetic amorphous silica containing up to 100 phr of synthetic amorphous silica.

8. The tire of claim 7 wherein said reinforcing filler is rubber reinforcing carbon black.

9. The tire of claim 7 wherein said reinforcing filler comprises rubber reinforcing carbon black and up to 100 phr of amorphous silica wherein said amorphous silica is precipitated silica.

10. The tire of claim 9 wherein said reinforcing filler comprises rubber reinforcing carbon black and from 5 to 100 phr of precipitated silica.

11. A process of preparing a tire with a tread (1) according to claim 1 which contains an internal closed cellular rubber layer (3) positioned between and abridging an outer non-cellular tread rubber layer (2) having a tread running surface and a non-cellular tread base rubber layer (4), the method comprising the steps of:
building an uncured rubber tire assembly which includes a circumferential tread comprising an outer uncured rubber layer without an elevated temperature activatable blowing agent, a circumferential internal uncured rubber layer which contains an elevated temperature activatable blowing agent, and a circumferential uncured tread base rubber layer which does not contain an elevated temperature blowing agent, wherein said internal uncured rubber layer is positioned between and abridges said outer uncured rubber layer and the uncured tread base rubber layer;
placing said uncured rubber tire assembly in a tire mold under conditions of elevated pressure and temperature to mold and cure the rubber tire assembly, including said tread, wherein said elevated temperature activatable blowing agent is thereby activated to release a gaseous byproduct in situ within the rubber composition and form a closed cellular structure for said internal rubber layer within said tread during the curing of said internal rubber layer.

12. The process of claim 11 wherein said circumferential uncured rubber tread is prepared by co-extruding together said uncured internal rubber layer, outer uncured layer and uncured rubber tread base rubber layer to from an uncured tread rubber strip.

13. The process of claim 11 or 12 wherein said blowing agent comprises at least one of p,p'-oxybis(benzenesulfonyl hydrazide), dinitrosopentamethylene tetramine, N,N'-dimethyl-N,N'-ditnitrosophthalimide, azodicarbonamide, sulfonyl hydrazides such as for example, benzenesulfonyl hydrazide, toluenesulfonyl hydrazide, p-toluene sulfonyl semicarbazide and p,p'-oxy-bis-(benzenesulfonyl semicarbazide).

## Patentansprüche

1. Reifen mit einer Gummilauffläche (1), umfassend eine umfangsgerichtete nicht-zellenförmige äußere Laufstreifenoberteilschicht (2), eine nicht-zellenförmige Laufstreifenunterteilgummischicht (4) und eine innere umfangsrichtete dazwischenliegende geschlossenzellige Gummi-Übergangsschicht (3), die zwischen der äußeren Laufstreifenoberteilgummischicht (2) und der nicht-zellenförmigen Laufstreifenunterteilgummischicht (4) positioniert ist;
wobei die äußere Laufstreifenoberteilgummischicht (2) eine Stollen- und Rillen-Konfiguration umfasst, mit erhabenen Stollen (8), die Profillaufflächen an den Außenflächen der Stollen (8) aufweisen, wobei die Laufflächen dazu gedacht sind, mit dem Boden in Kontakt zu kommen, und zwischen den Stollen (8) positionierten Rillen (7);
wobei die innere dazwischenliegende Zellgummi-Übergangsschicht (3) die äußere nicht-zellenförmige Gummi-Oberteilschicht (2) und die nicht-zellenförmige Unterteil-Gummischicht (4) der Profilkonfiguration überbrückt und daran anschließt;
**dadurch gekennzeichnet, dass** die innere dazwischenliegende Zellgummi-Übergangsschicht (3) von der Lauffläche des Reifens ausgeschlossen ist;
und wobei die Kautschukzusammensetzung der inneren geschlossenzelligen Gummischicht (3) das Produkt einer Kombination eines Methylendonators und Methylenakzeptors enthält.

2. Reifen nach Anspruch 1, wobei die innere geschlossenzellige Gummi-Übergangsgummischicht (3) eine in situ gebildete geschlossenzellige Struktur umfasst, die während des Vulkanisierens der Reifenanordnung auf einer erhöhten Temperatur durch Aktivierung eines bei einer erhöhten Temperatur aktivierbaren Treibmittels gebildet wird.

3. Reifen nach Anspruch 1, wobei das Produkt von Methylendonator und Methylenakzeptor durch Reaktion des Methylendonators und Methylenakzeptors in situ in der Kautschukzusammensetzung gebildet wird.

4. Reifen nach Anspruch 1 oder 3, wobei der Methylendonator mindestens eines von Hexamethoxymethylmelamin, Hexaethoxymethylmelamin, Ethoxymethylpyridiniumchlorid, N,N',N'-Trimethylmelamin, N-Methylmelamin und N', N"-Methylmelamin, Hexamethylentetramin und deren Mischungen umfasst.

5. Reifen nach Anspruch 1 oder 3, wobei der Methylenakzeptor mindestens eines von Phenolformaldehyd-reaktivem Harz, Resorcinol, Resorcinolmonobenazoat, phenolisches Cashewnussölharz und mehrwertigem Phenoxyharz umfasst.

6. Reifen nach mindestens einem der vorgenannten Ansprüche, wobei die Kautschukzusammensetzung der inneren geschlossenzelligen Gummischicht (4) eines oder mehrere von Polyethylen mit ultrahoher Molmasse (UHMWPE), syndiotaktischem Polybutadien, Kurzfasern und deren Mischungen umfasst.

7. Reifen nach mindestens einem der vorgenannten Ansprüche, wobei der innere geschlossenzellige Übergangsschichtgummi, auf Basis von Gewichtsteilen je 100 Gewichtsteile Kautschuk (ThK), umfasst:
(A) 100 ThK mindestens eines dienbasierten Elastomers;
(B) 20 bis 120 ThK eines Verstärkungsfüllstoffs, umfassend:
(1) Kautschukverstärkungs-Carbon Black, oder
(2) eine Kombination von Kautschukverstärkungs-Carbon Black und Silika, bevorzugt synthetisches ausgefälltes Silika, das bis zu 100 ThK synthetisches amorphes Silika enthält.

8. Reifen nach Anspruch 7, wobei der Verstärkungsfüllstoff Kautschukverstärkungs-Carbon Black ist.

9. Reifen nach Anspruch 7, wobei der Verstärkungsfüllstoff Kautschukverstärkungs-Carbon Black und bis zu 100 ThK amorphes Silika umfasst, wobei das amorphe Silika ausgefälltes Silika ist.

10. Reifen nach Anspruch 9, wobei der Verstärkungsfüllstoff Kautschukverstärkungs-Carbon Black und 5 bis 100 ThK ausgefälltes Silika umfasst.

11. Verfahren zur Herstellung eines Reifens mit einer Lauffläche (1) nach Anspruch 1, die eine innere geschlossenzellige Gummischicht (3) enthält, die zwischen einer äußeren, nicht-zellenförmigen Laufflächengummischicht (2), welche eine Profillauffläche aufweist, und einer nicht-zellenförmigen Laufstreifenunterteilgummischicht (4) positioniert ist und diese überbrückt, wobei das Verfahren die Schritte umfasst des:
Bauens einer unvulkanisierten Gummireifenanordnung, die eine umfangsgerichtete Lauffläche beinhaltet, welche eine äußere unvulkanisierte Gummischicht ohne ein auf erhöhter Temperatur aktivierbares Treibmittel umfasst, eine umfangsgerichtete innere unvulkanisierte Gummischicht, die ein auf erhöhter Temperatur aktivierbares Treibmittel enthält, und eine umfangsgerichtete unvulkanisierte Laufstreifenunterteilgummischicht, die kein auf erhöhter Temperatur aktivierbares Treibmittel enthält, wobei die innere unvulkanisierte Gummischicht zwischen der äußeren unvulkanisierten Gummischicht und der unvulkanisierten Laufstreifenunterteilgummischicht positioniert ist und diese überbrückt;
Plazierens der unvulkanisierten Gummireifenanordnung in ein Reifenformwerkzeug unter Bedingungen erhöhten Drucks und erhöhter Temperatur, um die Gummireifenanordnung, einschließlich der Lauffläche, zu formen und zu vulkanisieren, wobei besagtes, auf erhöhter Temperatur aktivierbares Treibmittel dadurch aktiviert wird, um in situ innerhalb der Kautschukzusammensetzung ein gasförmiges Nebenprodukt freizusetzen und während des Vulkanisierens der inneren Gummischicht eine geschlossenzellige Struktur für diese innere Gummischicht in der Lauffläche zu bilden.

12. Verfahren nach Anspruch 11, wobei die umfangsgerichtete unvulkanisierte Gummilauffläche hergestellt wird durch gemeinsames Coextrudieren der unvulkanisierten inneren Gummischicht, äußeren unvulkanisierten Schicht und unvulkanisierten Gummilaufstreifenunterteilgummischicht, um einen unvulkanisierten Gummilaufflächenstreifen zu bilden.

13. Verfahren nach Anspruch 11 oder 12, wobei das Treibmittel mindestens eines von p,p'-Oxybis(benzolsulfonylhydrazid), Dinitrosopentamethylentetramin, N,N'-Dimethyl-N,N'-dinitrosophthalimid, Azodicarbonamid, Sulfonylhydrazide, wie beispielsweise Benzolsulfonylhydrazid, Toluolsulfonylhydrazid, p-Toluolsufonylsemicarbazid und p,p'-Oxy-bis-(benzolsulfonylsemicarbazid) umfasst.

## Revendications

1. Bandage pneumatique possédant une bande de roulement en caoutchouc (1) comprenant une couche de sommet externe (2) de bande de roulement, de type non cellulaire, une couche de caoutchouc de base de bande de roulement (4) de type non cellulaire et une couche de transition intermédiaire circonférentielle interne (3) en caoutchouc à alvéoles fermées qui vient se disposer entre ladite couche de caoutchouc de sommet externe (2) de bande de roulement et ladite couche de caoutchouc de base de bande de roulement de type non cellulaire (4) ;
dans lequel ladite couche de caoutchouc de sommet externe (2) de bande de roulement comprend une configuration du type à pavés et à rainures, les pavés surélevés (8) possédant des surfaces de roulement de bande de roulement sur les surfaces externes desdits pavés (8), ladite surface de roulement étant destinée à entrer en contact avec le sol et des rainures (7) étant disposées entre lesdits pavés (8) ;
dans lequel ladite couche de transition intermédiaire circonférentielle interne cellulaire (3) en caoutchouc surplombe ladite couche de sommet en caoutchouc externe (2) de type non cellulaire et ladite couche de caoutchouc de base de type non cellulaire (4) de ladite configuration de bande de roulement en les joignant ;
**caractérisé en ce que** ladite couche de transition intermédiaire interne en caoutchouc cellulaire (3) est exclu de la surface de roulement du bandage pneumatique ;
et dans lequel la composition de caoutchouc de ladite couche interne (3) de caoutchouc cellulaire contient le produit d'une combinaison d'un donneur de groupes méthylène et d'un accepteur de groupes méthylène.

2. Bandage pneumatique selon la revendication 1, dans lequel ladite couche de transition interne (3) en caoutchouc cellulaire à alvéoles fermées comprend une structure cellulaire à alvéoles fermées formée in situ que l'on obtient au cours de la vulcanisation de l'assemblage du bandage pneumatique à une température élevée par activation d'un agent de transformation en mousse qui peut être activé à une température élevée.

3. Bandage pneumatique selon la revendication 1, dans lequel ledit produit de donneur de groupes méthylène et d'accepteur de groupes méthylène est obtenu par mise en réaction dudit donneur de groupes méthylène et dudit accepteur de groupes méthylène in situ au sein de ladite composition de caoutchouc.

4. Bandage pneumatique selon la revendication 1 ou 3, dans lequel ledit donneur de groupes méthylène comprend au moins un membre choisi parmi le groupe comprenant l'hexaméthoxyméthylmélamine, l'hexaéthoxyméthylmélamine, la N,N',N'-triméthylmélamine, la N-méthylmélamine et la N,N'-méthylmélamine, l'hexaméthylènetétramine et leurs mélanges.

5. Bandage pneumatique selon la revendication 1 ou 3, dans lequel ledit accepteur de groupes méthylène comprend au moins un membre choisi parmi le groupe comprenant de la résine réactive de phénolformaldéhyde, du résorcinol, du monobenzoate de résorcinol, de la résine phénolique d'huile de noix de cajou, et de la résine phénoxy polyvalente.

6. Bandage pneumatique selon au moins une des revendications précédentes, dans lequel la composition de caoutchouc de ladite couche interne de caoutchouc cellulaire à alvéoles fermées (4) contient un membre ou plus choisi parmi le groupe comprenant du polyéthylène à poids moléculaire ultraélevé (UHMWPE), du polybutadiène syndiotactique, des courtes fibres et leurs mélanges.

7. Bandage pneumatique selon au moins une des revendications précédentes, dans lequel le caoutchouc de la couche interne cellulaire de transition du type à alvéoles fermées, comprend, en se basant sur des parties en poids par 100 parties en poids de caoutchouc (phr) :
(A) à concurrence de 100 phr, au moins un élastomère à base diénique ;
(B) à concurrence de 20 à 120 parties par 100, une matière de charge pour le renforcement, comprenant :
(1) du noir de carbone pour le renforcement du caoutchouc ; ou
(2) une combinaison de noir de carbone pour le renforcement du caoutchouc et de silice, de préférence de la silice amorphe synthétique contenant de la silice amorphe synthétique jusqu'à concurrence de 100 phr.

8. Bandage pneumatique selon la revendication 7, dans lequel ladite matière de charge pour le renforcement est du noir de carbone pour le renforcement du caoutchouc.

9. Bandage pneumatique selon la revendication 7, dans lequel ladite matière de charge pour le renforcement comprend du noir de carbone pour le renforcement du caoutchouc est jusqu'à concurrence de 100 phr, de la silice amorphe, ladite silice amorphe étant de la silice précipitée.

10. Bandage pneumatique selon la revendication 9, dans lequel ladite matière de charge pour le renforcement comprend du noir de carbone pour le renforcement du caoutchouc est de la silice précipitée à concurrence de 5 à 100 phr.

11. Procédé pour préparer un bandage pneumatique comprenant une bande de roulement (1) selon la revendication 1, qui contient une couche interne de caoutchouc cellulaire à alvéoles fermées (3) qui vient se disposer entre une couche externe de caoutchouc de bande de roulement (2) de type non cellulaire possédant une surface de roulement de bande de roulement et une couche de caoutchouc de base de bande de roulement (4) de type non cellulaire et qui surplombe lesdites deux couches, le procédé comprenant les étapes consistant à :
confectionner un assemblage non vulcanisé de bandage pneumatique en caoutchouc, qui englobe une bande de roulement circonférentielle comprenant une couche externe en caoutchouc non vulcanisé en l'absence d'un agent de transformation en mousse qui peut être activé à température élevée, une couche interne circonférentielle en caoutchouc non vulcanisé qui contient un agent de transformation en mousse qui peut être activé à température élevée, et une couche circonférentielle en caoutchouc de base de bande de roulement non vulcanisée qui ne contient pas un agent de transformation en mousse qui peut être activé à température élevée, ladite couche interne en caoutchouc non vulcanisé venant se disposer entre ladite couche externe en caoutchouc non vulcanisé et ladite couche en caoutchouc de base de bande de roulement, non vulcanisée, et surplombant lesdites deux couches ;
placer ledit assemblage de bandage pneumatique en caoutchouc non vulcanisé dans un moule pour bandage pneumatique dans des conditions de température et de pression élevées pour le moulage et la vulcanisation de l'assemblage du bandage pneumatique en caoutchouc, y compris ladite bande de roulement, ledit agent de transformation en mousse qui peut être activé à température élevée étant ainsi activé pour libérer un sous-produit gazeux in situ au sein de la composition de caoutchouc et pour y former une structure cellulaire fermée pour ladite couche de caoutchouc interne au sein de ladite bande de roulement au cours de la vulcanisation de ladite couche de caoutchouc interne.

12. Procédé selon la revendication 11, dans lequel on prépare ladite bande de roulement circonférentielle en caoutchouc non vulcanisé par coextrusion à la fois de ladite couche de caoutchouc interne non vulcanisé, de ladite couche externe non vulcanisée et de ladite couche de base de bande de roulement en caoutchouc non vulcanisé pour former une bande de caoutchouc de bande de roulement non vulcanisée.

13. Procédé selon la revendication 11 ou 12, dans lequel ledit agent de transformation en mousse comprend au moins un membre choisi parmi le groupe comprenant le p,p'-oxybis(benzènesulfonyl hydrazide), la dinitrosopentaméthylène tétramine, le N,N'-diméthyl-N,N'-dinitrosophthalimide, l'azodicarboxamide, des hydrazides de sulfonyle comme par exemple l'hydrazide de benzènesulfonyle, l'hydrazide de p-toluènesulfonyle et le p,p'-oxy-bis(benzènesulfonyl semicarbazide).
